# EUROPEAN PATENT APPLICATION

(11) **EP 3 509 154 A1**
(43) Date of publication of application: **10.07.2019**
(21) Application number: 17845935.0
(22) Date of filing: 19.07.2017
(51) Int. Cl.: H01M 10/0567, C07F 5/05, H01M 10/052, H01M 10/0568

(54) **ADDITIVE FOR ELECTROCHEMICAL ELEMENTS, ELECTROLYTE SOLUTION FOR ELECTROCHEMICAL ELEMENTS, ELECTROCHEMICAL ELEMENT, ELECTROLYTE SOLUTION FOR LITHIUM ION SECONDARY BATTERIES, LITHIUM ION SECONDARY BATTERY AND METHOD FOR PRODUCING ADDITIVE FOR ELECTROCHEMICAL ELEMENTS**

(30) Priority: 05.09.2016 JP 2016172380
(71) Applicant: Hitachi High-Technologies Corporation, Tokyo 105-8717 (JP)
(72) Inventor: HARUNA Hiroshi, Tokyo 100-8280 (JP); TAKAHASHI Shin, Tokyo 100-8280 (JP)
(74) Representative: MERH-IP Matias Erny Reichl Hoffmann Patentanwälte PartG mbB
(86) International application number: PCT/JP2017/026120
(87) International publication number: WO 2018/042925

(57) **Abstract**

The purpose of the present invention is to provide: an additive for electrochemical elements, which is capable of improving the service life characteristics of a battery, while having high physical stability; an electrolyte solution for electrochemical elements, which uses this additive for electrochemical elements; an electrochemical element; an electrolyte solution for lithium ion secondary batteries; a lithium ion secondary battery; and a method for producing an additive for electrochemical elements. An additive for electrochemical elements according to the present invention is characterized by being represented by general formula [(BO)₃(OR)₃]m(H₂O)n (wherein each of m and n represents an integer of 1 or more; and each R independently represents an organic group having 1 or more carbon atoms). A method for producing an additive for electrochemical elements according to the present invention is characterized by a synthesis by means of dehydration condensation of boric acid and an alcohol.

## Description

### Technical Field

The present invention relates to an additive for electrochemical elements, an electrolyte solution for electrochemical elements, an electrochemical element, an electrolyte solution for lithium ion secondary batteries, a lithium ion secondary battery, and a method for producing an additive for electrochemical elements.

### Background Art

In recent years, a power source for mobile communication such as a mobile phone or a portable personal computer is increasingly required to be downsized and have a high energy density, and not only storage of late-night electric power but also a power source for power storage combined with a solar battery and wind power generation are also readily developed. Because of environmental problems, an electric vehicle, and a hybrid vehicle and hybrid electric train utilizing electric power as a part of power have been readily put to practical use. However, a non-aqueous electrolyte solution secondary battery exhibits charge-discharge efficiency decreased by repeating charge and discharge, whereby a lithium ion secondary battery is required, which has less deterioration with time in battery performance. Specifically, this deterioration with time occurs in initial capacity, rate characteristics, high temperature storage characteristics, cycle characteristics, and charge-discharge characteristics at low temperatures or the like. Improvements in a positive electrode active material, a negative electrode active material, an electrolyte solution, and a separator or the like as materials have been listed as important research problems, and numerous researches have been reported.

Patent Literature 1 discloses that a boroxine compound is added to an electrolyte solution for lithium ion secondary batteries in order to obtain an electrolyte solution for lithium ion secondary batteries capable of being repeatedly charged at a high voltage.

Patent Literature 2 discloses the use of an electrolyte solution which contains a compound generated by containing a boroxine compound and LiPF₆ in order to provide a lithium battery having less capacity deterioration with time and excellent service life characteristics and containing trivalent and higher valent boron.

### Citation List

### Patent Literature

PTL 1: WO2012/133556
PTL 2: JP 2015-041531 A

### Summary of Invention

### Technical Problem

The additives disclosed in Patent Literatures 1 and 2 are apt to be subjected to hydrolysis, and are apt to be decomposed. Therefore, an additive is desired, which has improved service life characteristics and high material stability.

An object of the present invention is to provide: an additive for electrochemical elements which can improve the service life characteristics of an electrochemical element and has high material stability; an electrolyte solution for electrochemical elements; an electrochemical element; an electrolyte solution for lithium ion secondary batteries; a lithium ion secondary battery which use the additive for electrochemical elements; and a method for producing an additive for electrochemical elements.

### Solution to Problem

In order to solve the above-mentioned problems, an additive for electrochemical elements according to the present invention is represented by the general formula: [(BO)₃(OR)₃]ₘ(H₂O)ₙ, wherein each of m and n represents an integer of 1 or more, and each R independently represents an organic group having 1 or more carbon atoms.

### Advantageous Effects of Invention

The present invention can provide: an additive for electrochemical elements which improves the service life characteristics of an electrochemical element and has high material stability, an electrolyte solution for electrochemical elements; an electrochemical element; an electrolyte solution for lithium ion secondary batteries; a lithium ion secondary battery which use the additive for electrochemical elements; and a method for producing an additive for electrochemical elements.

### Brief Description of Drawings

FIG. 1 schematically shows the internal structure of a battery according to one embodiment.
FIG. 2 shows the mass spectrum of an additive for electrochemical elements according to Example 4.

### Description of Embodiments

Preferred embodiments of the present invention will be described below. The matter necessary for carrying out the invention, other than that specifically referred to herein, may be construed as a design matter to be supported by the conventional techniques in the pertinent art, for a person skilled in the art. The present invention can be carried out on the basis of the contents disclosed herein and the common technical knowledge in the pertinent art. In the drawings presented below, members and parts demonstrating the same action are denoted by the same reference numerals and redundant explanation thereof may be omitted or simplified. Dimensional relationships (length, width, thickness, or the like) in the drawings do not necessarily reflect the actual dimensional relationships.

As a result of intensive research, the present inventors have found that, by using a cyclic borate having a moisture content equal to or less than a certain value as an additive as an electrolyte solution additive for lithium ion secondary batteries, the cycle life of a battery can be significantly improved. The present invention makes it possible to provide a long-life electrochemical element which can suppress reduction in battery capacity after a cycle test, to improve the life characteristics of the battery.

Hereinafter, a lithium ion secondary battery will be described as an example of an electrochemical element.

### <Additive for Electrochemical Elements>

An additive for electrochemical elements according to one embodiment of the present invention is a hydrate of a boroxine compound, and is represented by the general formula: [(BO)₃(OR)₃]ₘ(H₂O)ₙ, wherein each of m and n represents an integer of 1 or more, and each R independently represents an organic group having 1 or more carbon atoms.

Examples of the organic group (R) of the boroxine compound include a linear or branched alkyl group and a cycloalkyl group. Specific examples of such an organic group (R) include an ethyl group, an n-propyl group, an isopropyl group, an n-butyl group, a sec-butyl group, an isobutyl group, and a cyclohexyl group. The organic group (R) may contain a halogen atom exemplified by a fluorine atom, a chlorine atom, or a bromine atom, a nitrogen atom, a sulfur atom or the like.

The organic group preferably has 2 to 6 carbon atoms.

Specific examples of the boroxine compound include trimethoxyboroxine ((O-CH₃)₃(BO)₃), triethoxyboroxine ((O-CH₂CH₃)₃(BO)₃), triisopropoxyboroxine ((O-CH(CH₃)₂)₃(BO)₃), and triscyclohexyloxyboroxine ((O-C₆H₁₁)₃(BO)₃).

The boroxine compound is preferably a compound having a secondary alkyl group as the organic group (R). The organic group (R) is advantageously a secondary alkyl group in that the boroxine compound is hardly decomposed and appropriate solubility can also be obtained. As the boroxine compound, tri-iso-propoxyboroxine (TiPBx) is particularly suitably used.

In the boroxine compound represented by (BO)₃(OR)₃, the material stability of the boroxine compound is improved by coordinating water molecules. As a result, the boroxine compound is easily treated in the atmosphere, whereby the boroxine compound is likely to be added as an additive to the electrolyte solution. This is because one molecule of water is hydrated with respect to two molecules of (BO)₃(OR)₃, and one molecule of water is chelated with two molecules of (BO)₃(OR)₃, whereby the stability of the molecule structure is improved. As a result, the reactivity of the boroxine compound with moisture can be suppressed, whereby the boroxine compound can be treated in the atmosphere. n representing the number of molecules of water and m representing the number of molecules of the boroxine compound have a relationship of n ≤ m. It is more preferable that n is 1 or 2, and m is 1 to 3.

Particularly, the boroxine compound in which one molecule of H₂O adheres to one molecule of (BO)₃(OR)₃, and the boroxine compound in which one molecule of H₂O adheres to two molecules of (BO)₃(OR)₃ have high structure stability. Therefore, it is preferable that the molecular weight measured by a direct ionization method is 276.2 m/Z or 533.4 m/Z. It is considered that these are the boroxine compound in which one molecule of water adheres to one molecule of triisopropoxyboroxine, and the boroxine compound in which one molecule of water component adheres to two molecules of triisopropoxyboroxine. B contained in (BO)₃(OR)₃ has two types of isotopes, that is, ¹⁰B and ¹¹B naturally existing, and ¹¹B occupies about 80% of natural B. Therefore, the molecular weight measurement of (BO)₃(OR)₃ is influenced by the ratio existing in nature of ¹¹B and ¹⁰B, and measurement results showing a plurality of molecular weight peaks in the vicinity of the main peak of 276.2 or 533.4 are often obtained.

The boroxine compound has an action of interacting with lithium ions derived from LiPF₆ which is an electrolyte salt to improve the degree of dissociation of the lithium ions. Therefore, the electrolyte solution contains an appropriate amount of the boroxine compound with respect to the total amount of the electrolyte solution, whereby the capacity of the lithium ion secondary battery can be effectively improved.

The boroxine compound also has an action of reacting with the positive electrode active material to form a coating film on the surface of the positive electrode active material. This coating film contains a compound having a boron atom, and particularly a compound having a B-O bond. That is, by the action of the boroxine compound, a part of the surface of the lithium-transition metal composite oxide forms a state of having the boron atom. The decomposition reaction of the non-aqueous solvent on the surface of the positive electrode active material is suppressed, which provides an effect of improving the cycle characteristics of the lithium ion secondary battery.

### <Method for Producing Additive for Electrochemical Elements>

The hydrate of the boroxine compound is synthesized by a dehydration reaction between boric acid (B(OH)₃) and an alcohol (R-OH). As shown in the following formula 1, in the dehydration reaction between boric acid and an alcohol, H₂O is formed in the system, whereby the boroxine compound becomes a hydrate.

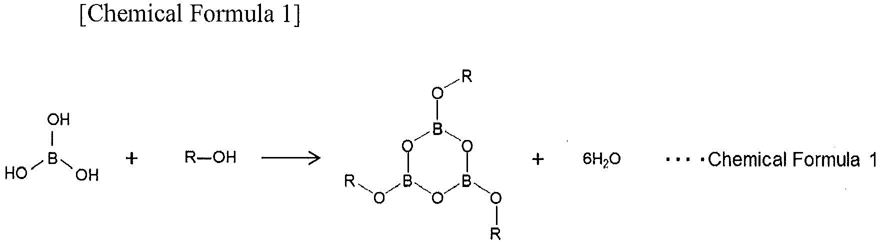

For example, if isopropanol is used as the alcohol, a hydrate of triisopropoxyboroxine in which the organic group (R) of the boroxine compound is an isopropyl group can be synthesized. A hydrate of trimethoxyboroxine, a hydrate of triethoxyboroxine, and a hydrate of tris-cyclohexyloxyboroxine can be respectively synthesized by using methanol, ethanol, or cyclohexal as the alcohol.

The boroxine compounds described in Patent Literatures 1 and 2 are synthesized by a cyclization reaction between borate ester (B(OR)₃) and boric anhydride (B₂O₃). As shown in the following formula 2, in the cyclization reaction between boric acid ester and boric anhydride, no H₂O is formed in the system, whereby no hydrate can be synthesized.

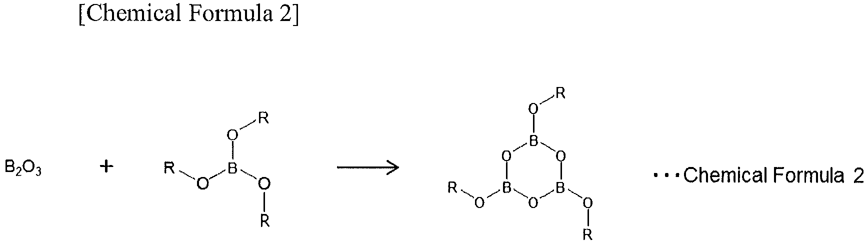

These are desirably synthesized by using a solvent having a low water content. In order to maintain an inert atmosphere during a chemical reaction, an inert gas such as argon or nitrogen is preferably caused to flow to avoid the mixing of moisture. When a large amount of moisture is mixed, the hydrolysis of boric acid as a raw material proceeds, whereby the reaction yield may be lowered. Alternatively, the purity of the compound may be improved by repeating recrystallization using a good solvent and a poor solvent and freeze drying or the like. A solvent completely dissolving a raw material is desirably selected as the solvent used for the reaction, but a suspension or a slightly dissolved state provided by high temperature heating or the like makes it possible to cause the reaction to proceed. As a specific example, a solvent such as toluene or benzene having lower polarity than that of a protic solvent such as an alcohol is desirably used. The identification of a synthetic substance can be confirmed by the NMR measurement or molecular weight analysis of a solution in which a compound is dissolved in a deuterated solvent. Particularly, in the molecular weight measurement results of the substance having boron, two kinds of boron 10 (about 20%) and boron 11 (about 80%) naturally exist, whereby the corresponding molecular weights are measured, which exhibit a plurality of peaks peculiar to a boron-containing substance. This fact can also be used as an important index for the confirmation of the synthesis of the boron-containing substance.

### <Electrolyte Solution for Electrochemical Elements>

The electrolyte solution (non-aqueous electrolyte solution) contains the hydrate of the boroxine compound, a supporting salt, and a non-aqueous solvent. As the supporting salt, at least lithium hexafluorophosphate (LiPF6) is used. As the supporting salt, only LiPF₆ may be used alone, or another lithium salt may be used in combination. Examples of the other lithium salt used in combination with LiPF₆ include LiBF₄, LiClO₄, LiAsF₆, LiCF₃SO₂, Li (CF₃SO₂)₂N, Li (C₂F₅SO₂)₂N, Li (F₂SO₂)₂N, LiF, Li₂CO₃, LiPF₄(CF₃)₂, LiPF₄(CF₃SO₂)₂, LiBF₃(CF₃), and LiBF₂(CF₃SO₂)₂.

A lithium ion concentration in the electrolyte solution is preferably in the range of 0.6 mol/L or more and 1.5 mol/L or less. When the concentration is 0.6 mol/L or more, good ion conductivity can be realized. When the concentration is 1.5 mol/L or less, the resistance of ion conduction is suppressed to a low level, which also provides an increased reaction speed of lithium ions.

The content of the boroxine compound in the electrolyte solution is preferably 2.0% by mass or less, and more preferably 1.0% by mass or less.

Examples of the non-aqueous solvent used in the electrolyte solution include a chain carbonate, a cyclic carbonate, a chain carboxylic acid ester, a cyclic carboxylic acid ester, a chain ether, a cyclic ether, an organic phosphorous compound, and an organic sulfur compound. These compounds may be used alone, or in combination of two or more.

Examples of the chain carbonate include dimethyl carbonate, ethyl methyl carbonate, diethyl carbonate, methyl propyl carbonate, and ethyl propyl carbonate. Examples of the cyclic carbonate include ethylene carbonate, propylene carbonate, vinylene carbonate, 1,2-butylene carbonate, and 2,3-butylene carbonate.

Examples of the chain carboxylic acid ester include methyl acetate, ethyl acetate, propyl acetate, butyl acetate, methyl propionate, ethyl propionate, and propyl propionate. Examples of the cyclic carboxylic acid ester include γ-butyrolactone, γ-valerolactone, and δ-valerolactone.

Examples of the chain ether include dimethoxymethane, diethoxymethane, 1,2-dimethoxyethane, 1-ethoxy-2-methoxyethane, and 1,3-dimethoxypropane. Examples of the cyclic ether include tetrahydrofuran, 2-methyltetrahydrofuran, and 3-methyltetrahydrofuran.

Examples of the organic phosphorus compound include phosphoric acid esters such as trimethyl phosphate, triethyl phosphate, and triphenyl phosphate; phosphorous acid esters such as trimethyl phosphite, triethyl phosphite, and triphenyl phosphite; and trimethylphosphine oxide. Examples of the organic sulfur compound include 1,3-propane sultone, 1,4-butane sultone, methyl methanesulfonate, sulfolane, sulfolene, dimethylsulfone, ethyl methyl sulfone, methyl phenyl sulfone, and ethyl phenyl sulfone.

Each of these compounds used as a non-aqueous solvent may have a substituent, or be a compound in which an oxygen atom is substituted with a sulfur atom. Examples of the substituent include halogen atoms such as a fluorine atom, a chlorine atom, and a bromine atom. When two or more types of compounds are used in combination as non-aqueous solvents, it is preferable to combine a compound having high relative permittivity and a relatively high viscosity such as a cyclic carbonate and a cyclic lactone with a compound having a relatively low viscosity such as a chain carbonate. In particular, the combination of ethylene carbonate and ethyl methyl carbonate or diethyl carbonate, which has a large decrease in discharge capacity associated with charge and discharge is suitable in that the formation of the coating film effectively improves the cycle characteristics.

The electrolyte solution may contain various additives as a second additive in addition to the hydrate of the boroxine compound (first additive).

The second additive is not particularly limited as long as it is an additive for the non-aqueous electrolyte solution of the lithium ion battery, and can be added according to required functions. Examples thereof include an additive for forming a coating film on the surface of an electrode, an additive for suppressing overcharge, an additive for imparting flame retardancy to an electrolyte solution, an additive for suppressing the elution of Mn from a positive electrode active material, and an additive for improving the ionic conductivity of an electrolyte solution.

Examples of the additive for forming a coating film on the surface of an electrode include carbonates such as vinylene carbonate (VC) and monofluorinated ethylene carbonate, carboxylic acid anhydrides, sulfur compounds such as 1,3-propane sultone, and boron compounds such as lithium bis(oxalate)borate (LiBOB) and trimethyl borate.

Functional groups such as C=O, C-H, and COO are present on the surface of the negative electrode active material. These functional groups irreversibly react with the non-aqueous solvent in accordance with the battery reaction to form a surface coating film referred to as a solid electrolyte interphase (SEI) coating film. The SEI coating film exhibits an action of suppressing the decomposition of the non-aqueous solvent, but it is generated by consuming electric charges in the battery reaction, which contributes to the decreased capacity of the battery.

From the viewpoint of suppressing the battery capacity reduction and the output reduction, the addition amount of the additive for forming the coating film on the surface of the electrode is preferably 0.01% by mass to 10% by mass, more preferably 0.1% by mass to 5% by mass,, and still more preferably 0.3% by mass to 3% by mass per the weight of the electrolyte solution.

Examples of the overcharge inhibitor which can be used include biphenyl, biphenyl ether, terphenyl, methyl terphenyl, dimethyl terphenyl, cyclohexylbenzene, dicyclohexylbenzene, triphenylbenzene, hexaphenylbenzene, adiponitrile, and dioxanes. As the flame retardant, for example, organic phosphorus compounds such as trimethyl phosphate and triethyl phosphate, and fluorides of non-aqueous solvents including boric acid esters, or the like can be used.

As the wettability improver, for example, chain ethers such as 1,2-dimethoxyethane, or the like can be used. Examples of a substance exhibiting a metal ion capturing effect include a substance having a complexation ability to form a complex with a metal ion eluted in an electrolyte solution, and electrostatically binding to the metal ion as a positive charge charged to a negative charge such as N, O, S. Examples of a substance improving the ionic conductivity of an electrolyte solution include a substance capable of weakening the electrostatic attraction of the lithium cation and anion moieties of an electrolyte by complex forming with N, O, S or a lithium cation in an electrolyte solution in order to improve the degree of dissociation of an electrolyte used for a lithium ion battery.

These additives may be used in combination, but the total addition amount of the additive is preferably 10% by mass or less per the weight of the electrolyte solution.

The non-aqueous electrolyte solution can be used for other electric storage devices using lithium ions as a carrier in addition to a lithium ion secondary battery. Examples of the other electric storage devices include capacitors such as a lithium ion capacitor and an electric double layer capacitor. The capacitor includes, for example, a positive electrode which causes polarization, a negative electrode, and the non-aqueous electrolyte solution containing a lithium salt. As an electrode material which causes polarization, for example, the carbon material such as activated carbon can be used. The electric storage device including the non-aqueous electrolyte solution can suppress the decomposition of the non-aqueous electrolyte solution, and reduce the composition change of the non-aqueous electrolyte solution promoted under a high temperature storage condition, and the decrease of the discharge capacity caused by the deposition of a decomposed matter.

### <Battery Structure>

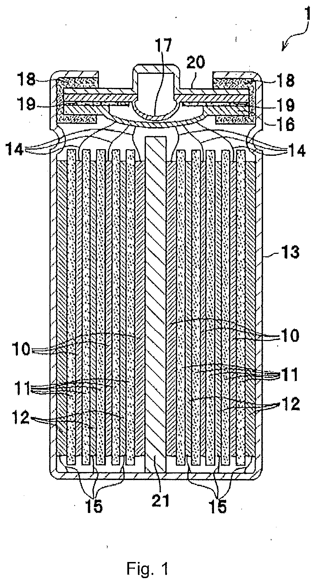

FIG. 1 is a cross-sectional view schematically showing the structure of a lithium ion secondary battery according to an embodiment of the present invention.

As shown in FIG. 1, a lithium ion secondary battery 1 according to the present embodiment includes a positive electrode 10, a separator 11, a negative electrode 12, a battery container 13, a positive electrode current collecting tab 14, a negative electrode current collecting tab 15, an inner lid 16, an inner pressure relief valve 17, a gasket 18, a positive temperature coefficient (PTC) resistor element 19, a battery lid 20, and an axial core 21. The battery lid 20 is an integrated part including the inner lid 16, the inner pressure relief valve 17, the gasket 18, and the resistor element 19.

The positive electrode 10 and the negative electrode 12 are provided in a sheet form, and are stacked on each other with the separator 11 interposed therebetween. A cylindrical electrode group is formed by winding the positive electrode 10, the separator 11, and the negative electrode 12 around the axial core 21.

Any known axial core can be used as the axial core 21 as long as it can carry the positive electrode 10, the separator 11 and the negative electrode 12. Examples of the material of the axial core 21 include polypropylene and polyphenylene sulfide. The electrode group can have various shapes in addition to the cylindrical shape shown in FIG. 1, and the electrode group may be a laminate of strip electrodes, a laminate of the positive electrode 10 and the negative electrode 12 wound in an arbitrary shape such as a flat shape, and a multilayer structure in which the positive electrode 10 and the negative electrode 12 are housed in a bag-like separator used as the separator 11 and sequentially stacked. As the shape of the battery can 13, a shape such as a cylindrical shape, a flat oblong shape, a flat elliptic shape, a square shape, or a coin may be selected according to the shape of the electrode group.

The battery container 13 can be formed of a material having corrosion resistance with respect to an electrolyte solution, for example, aluminum, stainless steel, nickel-plated steel, or the like. When the battery container 13 is electrically connected to the positive electrode 10 or the negative electrode 12, the material for the battery container 13 is selected such that the corrosion of the battery container 13 and the denaturation of the material due to alloying with lithium do not occur in a portion in contact with the electrolyte solution. The inner surface of the battery container 13 may be subjected to a surface processing treatment for improving corrosion resistance and adhesion.

The positive electrode current collecting tab 14 and the negative electrode current collecting tab 15 for leading out a current are respectively connected to the positive electrode 10 and the negative electrode 12 by spot welding, ultrasonic welding, or the like. The electrode group provided with the positive electrode current collecting tab 14 and the negative electrode current collecting tab 15 is housed in the battery container 13. The positive electrode current collecting tab 14 is electrically connected to the bottom surface of the battery lid 20. The negative electrode current collecting tab 15 is electrically connected to the inner wall of the battery container 13. As shown in FIG. 1, a plurality of positive electrode current collecting tabs 14 and a plurality of negative electrode current collecting tabs 15 may be provided for the electrode group. Such provision makes it possible to cope with a large current.

The electrolyte solution (non-aqueous electrolyte solution) is injected into the battery container 13. A method for injecting the electrolyte solution may be a method for directly injecting the electrolyte solution in a state where the battery lid 20 is opened, or a method for injecting the electrolyte solution from an injection port provided in the battery lid 20 in a state where the battery lid 20 is closed, or the like. The opening of the battery container 13 is hermetically sealed by joining the battery lid 20 by welding, caulking or the like. A relief valve is provided in the battery lid 20, and is opened when the inner pressure of the battery container 13 excessively rises.

### <Positive Electrode>

The positive electrode 10 contains a lithium-transition metal composite oxide as a positive electrode active material which can reversibly absorb and release lithium ions. The positive electrode 10 includes, for example, a positive electrode mixture layer containing a positive electrode active material, a conductive agent, and a binder, and a positive electrode current collector having one surface or both surfaces coated with the positive electrode mixture layer. The lithium-transition metal composite oxide which is the positive electrode active material may be contained in the state of primary particles, or may be contained in a state where secondary particles are formed.

As the lithium-transition metal composite oxide, an appropriate type of positive electrode active material used in a general lithium ion secondary battery can be used. However, it is preferable that the lithium-transition metal composite oxide contains at least one transition metal selected from the group consisting of manganese (Mn), cobalt (Co), and nickel (Ni).

Specific examples of the lithium-transition metal composite oxide include LiCoO₂, LiNiO₂, and LiMn₂O₄. There can be used LiMnO₃, LiMn₂O₃, LiMnO₂, Li₄Mn₅O₁₂, LiMn₂₋ₓM1ₓO₂ (M1 is at least one metal element selected from the group consisting of Co, Ni, Fe, Cr, Zn, and Ti, x = 0.01 to 0.2 is satisfied), Li₂Mn₃M2O₈ (M2 is at least one metal element selected from the group consisting of Fe, Co, Ni, Cu, and Zn), Li_{1-y}A_{y}Mn₂O₄ (A is at least one selected from the group consisting of Mg, B, Al, Fe, Co, Ni, Cr, Zn, and Ca, y = 0.01 to 0.1 is satisfied), LiNi_{1-z}M2_{z}O₂ (M2 is at least one selected from the group consisting of Mn, Fe, Co, Al, Ga, Ca, and Mg, z = 0.01 to 0.2 is satisfied), LiCo₁₋ᵥM3ᵥO₂ (M3 is at least one selected from the group consisting of Ni, Fe, and Mn, z = 0.01 to 0.2 is satisfied), LiFeO₂, Fe₂(SO₄)₃, Fe(MoO₄)₃, FeF₃, LiFePO₄, and LiMnPO₄ or the like.

As the conductive agent, carbon particles and carbon fibers or the like made of graphite, carbon black, acetylene black, Ketjen black, and channel black or the like can be used. These conductive agents may be used alone or in combination of two or more. The amount of the conductive agent is preferably 5% by mass or more and 20% by mass or less based on the positive electrode active material. When the amount of the conductive agent is in such a range, good conductivity can be obtained, and high capacity can also be secured.

Examples of the binder which can be used include suitable materials such as polyvinylidene fluoride (PVDF), polytetrafluoroethylene, polychlorotrifluoroethylene, polypropylene, polyethylene, an acrylic polymer, a polymer having an imide or amide group, and copolymers thereof. These binders may be used alone or in combination of two or more. A thickening binder such as carboxymethyl cellulose may also be used in combination. The amount of the binder is preferably 1% by mass or more and 7% by mass or less based on the total amount of the positive electrode active material, the conductive agent, and the binder. When the amount of the binder is in such a range, the capacity is less likely to decease, and the internal resistance is less likely to excessively increase. The coatability and formability of the positive electrode mixture layer and the strength of the positive electrode mixture layer are less likely to be impaired.

As the positive electrode current collector, for example, appropriate materials such as a metal foil, a metal plate, a foamed metal plate, an expanded metal, and a punching metal which are made of aluminum, stainless steel, titanium or the like can be used. The metal foil may be, for example, a perforated foil perforated so as to have a hole diameter of about 0.1 mm or more and 10 mm or less. The thickness of the metal foil is preferably 10 µm or more and 100 µm or less.

The positive electrode 10 can be prepared by, for example, mixing a positive electrode active material, a conductive agent, a binder, and an appropriate solvent to prepare a positive electrode mixture, and coating the positive electrode mixture on a positive electrode current collector, followed by drying and compression molding. As a method for coating the positive electrode mixture, for example, a doctor blade method, a dipping method, a spray method, or the like can be used. As a method for subjecting the positive electrode mixture to compression molding, for example, a roll press or the like can be used.

The thickness of the positive electrode mixture layer can be set to an appropriate thickness in consideration of the specification of the lithium ion secondary battery to be produced and the balance with the negative electrode, but when the positive electrode mixture is coated on both the surfaces of the positive electrode current collector, the thickness of the positive electrode mixture layer is preferably 50 µm or more and 250 µm or less. The thickness of the positive electrode mixture layer can be set according to specifications such as the capacity and resistance value of the lithium ion secondary battery, but this coating amount is less likely to cause an excessive distance between electrodes, and distribution for a reaction in which lithium ions are stored and released.

The particle size of the positive electrode active material is usually equal to or less than the thickness of the positive electrode mixture layer. When coarse particles are present in the powder of the synthesized positive electrode active material, it is preferable to previously subject the powder to sieve separation or wind stream separation or the like to set the average particle diameter of the positive electrode active material to be smaller than the thickness of the positive electrode mixture layer.

The density of the positive electrode mixture layer can be set to an appropriate density in consideration of the specification of the lithium ion secondary battery to be produced and the balance with the negative electrode, but from the viewpoint of securing the capacity of the lithium ion secondary battery, the density of the positive electrode mixture layer is preferably 60% or more of the true density.

### <Separator>

The separator 11 is provided to prevent short-circuit caused by direct contact between the positive electrode 10 and the negative electrode 12. As the separator 11, a microporous film made of polyethylene, polypropylene, an aramid resin or the like, or a film obtained by coating a heat resistant substance such as alumina particles on the surface of the microporous film, or the like can be used. The positive electrode 10 and the negative electrode 12 themselves may have the function of the separator 11 such that the battery performance is not impaired.

### <Negative Electrode>

The negative electrode 12 contains a negative electrode active material capable of reversibly storing and releasing lithium ions. The negative electrode 12 contains, for example, a negative electrode mixture containing a negative electrode active material and a binder, and a negative electrode current collector.

As the negative electrode active material, an appropriate type of negative electrode active material used in a general lithium ion secondary battery can be used. Specific examples of the negative electrode active material include an easily graphitizable material obtained from natural graphite, petroleum coke, or pitch coke treated at a high temperature of 2,500°C or higher, mesophase carbon, amorphous carbon, graphite whose surface is coated with amorphous carbon, a carbon material with the surface crystallinity being lowered by mechanically treating the surface of natural or artificial graphite, a material formed by coating and adsorbing an organic material such as a polymer on carbon surface, a carbon fiber, metal lithium, an alloy of lithium with aluminum, tin, silicon, indium, gallium, or magnesium or the like, a material in which a metal is supported on the surface of silicon particles or carbon particles, and an oxide of a metal such as tin, silicon, iron, or titanium. Examples of the metal to be supported include lithium, aluminum, tin, silicon, indium, gallium, magnesium, and alloys thereof.

The negative electrode active material is particularly preferably a negative electrode active material capable of reversibly storing and releasing lithium ions at a potential of 0.3 (Vvs Li⁺/Li) or less. The lithium ion secondary battery according to the present embodiment has cycle characteristics improved even in such a voltage range, and can realize high capacity and output.

As the binder, any of an aqueous binder which is dissolved, swollen, or dispersed in water, and an organic binder which is not dissolved, swollen, or dispersed in water can be used. Specific examples of the aqueous binder include a styrene-butadiene copolymer, an acrylic polymer, a polymer having a cyano group, and copolymers thereof. Specific examples of the organic binder include polyvinylidene fluoride (PVDF), polytetrafluoroethylene, and copolymers thereof. These binders may be used alone or in combination of two or more. A thickening binder such as carboxymethyl cellulose may also be used in combination.

The amount of the aqueous binder is preferably 0.8% by mass or more and 1.5% by mass or less based on the total amount of the negative electrode active material and the binder. On the other hand, the content of the organic binder is preferably 3% by mass or more and 6% by mass or less based on the total amount of the negative electrode active material and the binder. The amount of the binder in such a range is less likely to cause decreased battery capacity and excessive internal resistance. The coatability and formability of the negative electrode mixture layer and the strength of the negative electrode mixture layer are less likely to be impaired.

As the negative electrode current collector, a suitable material such as a metal foil, a metal plate, a foamed metal plate, an expanded metal, or a punching metal made of copper, a copper alloy containing copper as a main component, or the like can be used. The metal foil may be, for example, a perforated foil perforated so as to have a hole diameter of about 0.1 mm or more and 10 mm or less. The thickness of the metal foil is preferably 7 µm or more and 25 µm or less.

The negative electrode 12 can be prepared, for example, by mixing a negative electrode active material, a binder, and an appropriate solvent to prepare a negative electrode mixture, and coating the negative electrode mixture on a negative electrode current collector, followed by drying and compression molding. As a method for coating the negative electrode mixture, for example, a doctor blade method, a dipping method, and a spray method or the like can be used. As a method for subjecting the positive electrode mixture to compression molding, for example, a roll press or the like can be used.

The thickness of the negative electrode mixture layer can be set to an appropriate thickness in consideration of the specification of the lithium ion secondary battery to be produced and the balance with the positive electrode, but when the negative electrode mixture is coated on both the surfaces of the negative electrode current collector, the thickness of the negative electrode mixture layer is preferably 50 µm or more and 200 µm or less. The thickness of the negative electrode mixture layer can be set according to specifications such as the capacity and resistance value of the lithium ion secondary battery, but this coating amount is less likely to cause an excessive distance between electrodes, and distribution for a reaction in which lithium ions are stored and released.

Hereinafter, specific examples of the present invention will be further described with reference to Examples of the present invention and Comparative Examples.

### [Example 1]

### <Preparation of Boroxine Compound (Additive)>

An additive for lithium ion secondary batteries was synthesized by the following method.

15 g (0.24 mol) of boric acid (manufactured by Wako Pure Chemical Industries, Ltd.) and 17.7 g (0.30 mol) of isopropanol (manufactured by Tokyo Chemical Industry Co., Ltd.) were suspended in 100 g of toluene, and refluxed at 120°C for 10 hours. Thereafter, the reaction solution was cooled to room temperature, and unreacted isopropanol was distilled off. A powdery reaction product was confirmed to be formed from toluene. Under an inert atmosphere, the raw materials were weighed, and the reactant was recovered. Furthermore, when the molecular weight of the obtained powder was measured by a direct ionization method, a component exhibiting a main peak was detected at 276.2 m/Z which is a sum of 18 m/Z of the molecular weight of water (H₂O) and the molecular weight of triisopropoxyboroxine as a compound. For molecular weight measurement, Atmospheric Pressure Ionization High Resolution Time-of-Flight Mass Spectrometer (JMS-T100 LP AccuTOF LC, manufactured by JEOL Ltd.) was used. An ion source was DART (Direct Analysis in Real Time); helium was used for a DART gas; a helium heating temperature was 300°C; and the voltage of an orifice 1 was 30 V.

### <Evaluation of Material Stability of Boroxine Compound>

Material stability was evaluated by exposing the prepared boroxine compound in a dry room at a humidity of 20% and a temperature of 25°C for 10 minutes to confirm its property and odor. Those representing little change after and before exposure to the atmosphere were defined as "very good"; those representing little change in visual appearance but having boric acid odor were defined as "good", and those representing obvious change in visual appearance and having remarkable boric acid odor were defined as "poor".

### <Preparation of Lithium Ion Secondary Battery>

For a positive electrode active material, LiMn_{0.33}Co_{0.33}Ni_{0.33}O₂ having an average particle diameter of 10 µm and a specific surface area of 0.8 m²/g was used. A mixture of massive graphite and acetylene black mixed at a ratio of 9 : 2 with 85% by weight of the positive electrode active material was used as a conductive agent. The conductive agent was dispersed in an N-methyl-2-pyrrolidone (NMP) solution previously adjusted to 5% by weight of PVDF as a binder to produce a slurry. At this time, the mixing ratio of the positive electrode active material, the conductive agent, and PVDF was set to 85 : 10 : 5 at a weight ratio. This slurry was uniformly and equally coated as much as possible on an aluminum foil (positive electrode current collector) having a thickness of 20 µm. The slurry was coated, followed by drying at a temperature of 80°C. According to the same procedure, the slurry was coated on both the surfaces of the aluminum foil, followed by drying. Thereafter, the aluminum foil was subjected to compression molding by using a roll press machine, and the compression-molded product was cut so that a coating width was set to 5.4 cm and a coating length was set to 50 cm. An aluminum foil lead piece for taking out a current was welded to the product to prepare a positive electrode 10.

For a negative electrode active material, natural graphite was used, which had an interplanar spacing of 0.368 nm obtained by X-ray diffraction measurement, an average particle diameter of 20 µm, and a specific surface area of 5 m²/g. The average particle diameter was a value of D50, which was measured using a laser type diffraction/scattering type particle size distribution measuring apparatus. The specific surface area was measured with a constant capacity type gas adsorption apparatus.

A negative electrode active material and an aqueous dispersion of carboxymethyl cellulose were thoroughly mixed, and an aqueous dispersion of a styrene butadiene copolymer was dispersed in the mixture to produce a negative electrode slurry. The mixing ratio of the negative electrode active material, carboxymethyl cellulose, styrene butadiene copolymer was set to 98 : 1 : 1 as a weight ratio. This slurry was substantially uniformly coated on a rolled copper foil (negative electrode current collector) having a thickness of 10 µm.

The slurry was coated on both the surfaces of a rolled copper foil according to the same procedure as that for the positive electrode 10, followed by drying. Thereafter, the aluminum foil was subjected to compression molding by using a roll press machine, and the compression-molded product was cut so that a coating width was set to 5.6 cm and a coating length was set to 54 cm. A copper foil lead piece was welded to the product to prepare a negative electrode 12.

By using the prepared positive electrode 10 and negative electrode 12, a cylindrical battery 1 shown in Fig. 1 was prepared. In the positive electrode 10 and the negative electrode 12 shown in Fig. 1, a positive electrode lead 14 and a negative electrode lead 15 of a tab part for drawing out a current are formed by ultrasonic welding. The positive electrode lead 14 and the negative electrode lead 15 as the tab part are metal foils made of the same material as that of the current collector having a rectangular shape, and are members to be installed for taking out a current from the electrode. A separator 11 as a polyethylene single layer film was sandwiched between the positive electrode 10 and the negative electrode 12 to which the tabs were attached to produce a laminate, and the laminate was wound in a cylindrical (helical) shape as shown in Fig. 1 to form an electrode group. The electrode group was stored in a battery can 13 as a cylindrical container. After the electrode group was stored in the battery can 13, an electrolyte solution was injected into the battery can 13, and the battery can 13 was sealed with a gasket.

In an electrolyte solution, the concentration of LiPF₆ as an electrolyte was adjusted to 1.0 mol/L in a mixed solution prepared by mixing ethylene carbonate (EC) and ethyl methyl carbonate (EMC) at a weight ratio of EC : EMC = 1 : 2. The boroxine compound synthesized by the above method was added as a first additive at a concentration of 1% by weight based on the total weight of the non-aqueous solvent and LiPF₆ to the electrolyte solution.

The electrolyte solution thus prepared was injected into the battery can 13, and the battery can 13 was sealed with a sealing battery lid 20 to which a positive electrode terminal was attached, with a gasket 18 interposed therebetween, by caulking to prepare a cylindrical battery 1 having a diameter of 18 mm and a length of 650 mm.

### <Cycle test>

The cylindrical battery 1 thus prepared was charged at a constant current of 1500 mA and a constant voltage of 4.2 V for 5 hours in a thermostatic chamber at 25°C, and discharged to a battery voltage of 3.0 V at a constant discharge current of 1500 mA. This charge and discharge process was defined as one cycle, and a total of three cycles were carried out. The discharge capacity at the third cycle was defined as 100%, and a ratio of the discharge capacity to a 1500 mA discharge capacity after 1000 cycle tests was calculated. This ratio is defined as a discharge capacity retention rate. The cycle test was carried out in a constant temperature chamber at 25° C at a voltage of 4.2 V.

### [Example 2]

A lithium ion secondary battery was prepared in the same manner as in Example 1 except that 1% by weight of vinylene carbonate was added as a second additive to an electrolyte solution, and subjected to a cycle test.

The addition amount of vinylene carbonate was 1% by weight based on the total weight of a non-aqueous solvent and LiPF₆. The addition amount of a boroxine compound was 1% by weight based on the total weight of the non-aqueous solvent, LiPF₆, and vinylene carbonate.

### [Example 3]

A lithium ion secondary battery was prepared in the same manner as in Example 1 except that 2% by weight of vinylene carbonate was added as a second additive to an electrolyte solution, and subjected to a cycle test.

The addition amount of vinylene carbonate was 2% by weight based on the total weight of a non-aqueous solvent and LiPF₆. The addition amount of a boroxine compound was 1 % by weight based on the total weight of the non-aqueous solvent, LiPF₆, and vinylene carbonate.

### [Example 4]

A lithium ion secondary battery was prepared in the same manner as in Example 1 except that cyclic boroxine synthesized by the following method was used as an electrolyte solution additive, and subjected to a cycle test.

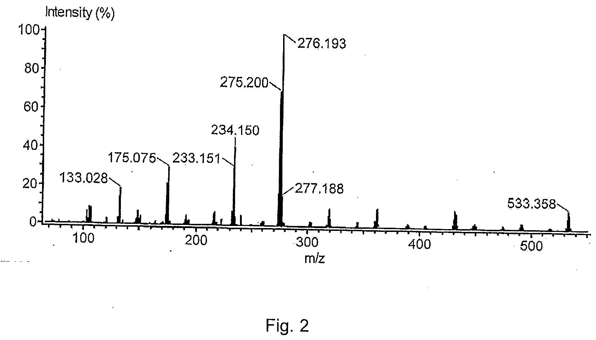

Triisopropoxyboroxine was synthesized in the same manner as in Example 1, and the synthesized triisopropoxyboroxine was freeze-dried to remove adhered moisture. The freeze-drying was performed by freezing triisopropoxyboroxine with ice water, reducing the pressure with a vacuum pump, and removing a vaporized component (water). The molecular weight of the freeze-dried triisopropoxyboroxine was measured by a direct ionization method in the same manner as in Example 1. Fig. 2 shows the mass spectrum of the freeze-dried triisopropoxyboroxine. In addition to a component exhibiting a main peak at 276.2 m/Z which is the sum of 18 m/Z and the molecular weight of triisopropoxyboroxine, a peak at 533 m/Z was also detected. The component of the peak detected at 533 m/z is considered to be one molecule of water component adhering to two molecules of triisopropoxyboroxine. That is, one molecule of water is considered to adhere to two molecules of cyclic boroxine.

### [Example 5]

A lithium ion secondary battery was prepared in the same manner as in Example 4 except that 1% by weight of vinylene carbonate was added as a second additive to an electrolyte solution, and subjected to a cycle test.

The addition amount of vinylene carbonate was 1% by weight based on the total weight of a non-aqueous solvent and LiPF₆. The addition amount of a boroxine compound was 1% by weight based on the total weight of the non-aqueous solvent, LiPF₆, and vinylene carbonate.

### [Example 6]

A lithium ion secondary battery was prepared in the same manner as in Example 4 except that 2% by weight of vinylene carbonate was added as a second additive to an electrolyte solution, and subjected to a cycle test.

The addition amount of vinylene carbonate was 2% by weight based on the total weight of a non-aqueous solvent and LiPF₆. The addition amount of a boroxine compound was 1 % by weight based on the total weight of the non-aqueous solvent, LiPF₆, and vinylene carbonate.

### [Example 7]

A lithium ion secondary battery was prepared in the same manner as in Example 3 except that the addition amount of a boroxine compound to an electrolyte solution was 2% by weight, and subjected to a cycle test.

### [Example 8]

A lithium ion secondary battery was prepared in the same manner as in Example 2 except that 1% by weight of fluoroethylene carbonate (FEC) was added as a second additive in place of vinylene carbonate, and subjected to a cycle test.

### [Example 9]

A lithium ion secondary battery was prepared in the same manner as in Example 2 except that [(BO)₃(OCH(CH)₂CH₃]₂(H₂O) was used as a boroxine compound, and subjected to a cycle test.

### [Example 10]

A cycle test was carried out in the same manner as in Example 1 except that trimethoxyboroxine synthesized from cyclic boric acid and methanol was used as an additive. The synthesized trimethoxyboroxine was liquid at room temperature.

### (Comparative Example 1)

A lithium ion secondary battery was prepared in the same manner as in Example 1 except that an electrolyte solution was used, in which the concentration of LiPF₆ as an electrolyte was adjusted to 1.0 mol/L in a mixed solution obtained by mixing EC and EMC at a weight ratio of EC : EMC = 1 : 2 was used, and subjected to a cycle test.

### (Comparative Example 2)

A lithium ion secondary battery was prepared in the same manner as in Example 1 except that 1% by weight of vinylene carbonate as a second additive was added to an electrolyte solution in which the concentration of LiPF₆ as an electrolyte was adjusted to 1.0 mol/L in a mixed solution obtained by mixing EC and EMC at a weight ratio of EC : EMC = 1 : 2, and subjected to a cycle test.

### (Comparative Example 3)

A lithium ion secondary battery was prepared in the same manner as in Example 1 except that 2% by weight of vinylene carbonate as a second additive was added to an electrolyte solution in which the concentration of LiPF₆ as an electrolyte was adjusted to 1.0 mol/L in a mixed solution obtained by mixing EC and EMC at a weight ratio of EC: EMC = 1 : 2, and subjected to a cycle test.

### (Comparative Example 4)

A lithium ion secondary battery was prepared in the same manner as in Example 1 except that cyclic boroxine synthesized by the following method was used as an electrolyte solution additive, and subjected to a cycle test.

10 g (0.14 mol) of boric anhydride and 22.6 g (0.12 mol) of triisopropoxy borate were suspended in 200 ml of dehydrated toluene, heated, and refluxed for 12 hours. The temperature of the reaction solution at that time was 120°C. After heating under reflux, the reaction solution was naturally cooled down to about room temperature, and filtered to remove unreacted boric anhydride. Thereafter, a solvent component was distilled off from the filtrate by a rotary evaporator to obtain 26 g of powdered triisopropoxyboroxine. The reaction yield at this time was 93%. Under an inert atmosphere in which high-purity argon gas was caused to flow, the raw materials were weighed, and the reaction product was recovered. The molecular weight of the obtained cyclic triisopropoxyboroxine was measured by a direct ionization method, and a main peak was confirmed at 257.7 m/z.

### (Comparative Example 5)

A lithium ion secondary battery was prepared in the same manner as in Comparative Example 4 except that 1% by weight of vinylene carbonate was added to an electrolyte solution, and subjected to a cycle test.

### (Comparative Example 6)

A lithium ion secondary battery was prepared in the same manner as in Comparative Example 4 except that 2% by weight of vinylene carbonate was added to an electrolyte solution, and subjected to a cycle test.

### (Comparative Example 7)

A cycle test was carried out in the same manner as in Example 1 except that trimethoxyboroxine was synthesized from boric anhydride and trimethylboric acid, and freeze-dried for use as an additive. The synthesized trimethoxyboroxine was liquid at room temperature.

**[Table 1]**

| | First additive | Addition amount (wt%) | Second additive | Addition amount (wt%) | material stability | Discharge capacity retention rate (%) |
|---|---|---|---|---|---|---|
| Example 1 | (BO)₃(OCH(CH₃)₂)₃(H₂O) | 1 | - | - | ⊚ | 53 |
| Example 2 | (BO)₃(OCH(CH₃)₂)₃(H₂O) | 1 | VC | 1 | ⊚ | 59 |
| Example3 | (BO)₃(OCH(CH₃)₂)₃(H₂O) | 1 | VC | 2 | ⊚ | 68 |
| Example4 | [(BO)₃(OCH(CH₃)₂)₃]₂(H₂O) | 1 | - | - | ○ | 52 |
| Example 5 | [(BO)₃(OCH(CH₃)₂)₃]₂(H₂O) | 1 | VC | 1 | ○ | 57 |
| Example6 | [(BO)₃(OCH(CH₃)₂)₃]₂(H₂O) | 1 | VC | 2 | ○ | 65 |
| Example 7 | (BO)₃(OCH(CH₃)₂)₃(H₂O) | 2 | VC | 2 | ⊚ | 54 |
| Example 8 | (BO)₃(OCH(CH₃)₂)₃ (H₂O) | 1 | FEC | 1 | ⊚ | 55 |
| Example 9 | [(BO)₃(OCH(CH)₂CH₃]₂(H₂O) | 1 | VC | 1 | ○ | 57 |
| Example 10 | (BO)₃(OCH₃)₃(H₂O) | 1 | - | - | ○ | 48 |
| Comparative Example 1 | None | - | - | - | - | 43 |
| Comparative Example 2 | None | - | VC | 1 | - | 47 |
| Comparative Example 3 | None | - | VC | 2 | - | 51 |
| Comparative Example4 | (BO)₃ (OCH(CH₃)₂)₃ | 1 | - | - | × | 55 |
| Comparative Example 5 | (BO)₃ (OCH(CH₃)₂)₃ | 1 | VC | 1 | × | 64 |
| Comparative Example 6 | (BO)₃(OCH(CH₃)₂)₃ | 1 | VC | 2 | × | 70 |
| Comparative Example 7 | (BO) ₃ (OCH₃)₃ | 1 | - | - | × | 41 |

According to Examples 1 to 10, it was found that, by adding the substance represented by [(BO)₃(OR)₃]ₘ(H₂O)ₙ (wherein m and n represent an integer of 1 or more, and each R represents an organic group having 1 or more carbon atoms) to the electrolyte solution, the capacity retention rate of the battery can be markedly improved. From these results, it was found that, by adding the compound represented by [(BO)₃(OR)₃]ₘ(H₂O)ₙ to the electrolyte solution, the life characteristics of the battery can be improved. It was found that each of the additives of Examples 1 to 10 has higher material stability than that of each of the additives of Comparative Examples 4 to 7. From these results, it was found that, by adding a certain amount of water to the boroxine compound, the material stability is improved, which causes the additive to be easily treated.

The capacity retention rate of each of Examples 2 and 3 is higher than that of Example 1 in which VC is not added as the second additive. The capacity retention rate of each of Examples 5 and 6 is higher than that of Example 4 in which VC as the second additive is not added. From these results, it was found that, by using the hydrate of the boroxine compound and VC in combination, the capacity retention rate can be further improved.

### Reference Signs List

- 10: positive electrode
- 11: separator
- 12: negative electrode
- 13: battery can
- 14: positive electrode current collecting tab
- 15: negative electrode current collecting tab
- 16: inner lid
- 17: inner pressure relief valve
- 18: gasket
- 19: PTC element
- 20: battery lid
- 21: axial core

## Claims

1. An additive for electrochemical elements represented by the general formula: [(BO)₃(OR)₃]ₘ(H₂O)ₙ,
wherein each of m and n represents an integer of 1 or more, and
each R independently represents an organic group having 1 or more carbon atoms.

2. The additive for electrochemical elements according to claim 1,
wherein each R independently represents an organic group having 2 to 6 carbon atoms.

3. The additive for electrochemical elements according to claim 1,
wherein R is any one of -CH(CH₃)₂, -CH₃, -CH₂CH₃, and -C₆H₁₁.

4. The additive for electrochemical elements according to any one of claims 1 to 3,
wherein m and n satisfy a relationship of n ≤ m.

5. An electrolyte solution for electrochemical elements comprising the additive for electrochemical elements according to any one of claims 1 to 4.

6. An electrochemical element comprising the additive for electrochemical elements according to any one of claims 1 to 4.

7. An electrochemical element comprising a non-aqueous electrolyte solution,
wherein the non-aqueous electrolyte solution contains the additive for electrochemical elements according to any one of claims 1 to 4 and a non-aqueous solvent.

8. An electrolyte solution for lithium ion secondary batteries comprising the additive for electrochemical elements according to any one of claims 1 to 4, a non-aqueous solvent, and LiPF₆.

9. The electrolyte solution for lithium ion secondary batteries according to claim 8, further comprising vinylene carbonate.

10. The electrolyte solution for lithium ion secondary batteries according to claim 9,
wherein a content of the vinylene carbonate is 2% by weight or less based on the total weight of the non-aqueous solvent and LiPF₆.

11. A lithium ion secondary battery comprising:
a positive electrode;
a negative electrode; and
a non-aqueous electrolyte solution,
wherein the non-aqueous electrolyte solution is the electrolyte solution for lithium ion secondary batteries according to any one of claims 8 to 10.

12. A method for producing an additive for electrochemical elements represented by the general formula: [(BO)₃(OR)₃]ₘ(H₂O)ₙ,
wherein each of m and n represents an integer of 1 or more,
m and n satisfy a relationship of n ≤ m, and
each R independently represents a hydrocarbon group having 1 or more carbon atoms,
wherein the additive for electrochemical elements is synthesized by means of dehydration condensation of boric acid and an alcohol.

13. The method for producing an additive for electrochemical elements according to claim 12, wherein the alcohol is any one of methanol, ethanol, isopropanol, and cyclohexanol.
